(19) Europäisches Patentamt
European Patent Office
Office européen des brevets

(11) **EP 2 710 662 B1**

(12) **EUROPEAN PATENT SPECIFICATION**

(45) Date of publication and mention
of the grant of the patent:
**21.01.2015 Bulletin 2015/04**

(21) Application number: **12720890.8**

(22) Date of filing: **15.05.2012**

(51) Int Cl.:
***H01M 10/44*** *(2006.01)*

(86) International application number:
**PCT/EP2012/059041**

(87) International publication number:
**WO 2012/156413 (22.11.2012 Gazette 2012/47)**

(54) **METHOD FOR REGENERATING LEAD BATTERIES**

VERFAHREN ZUR REGENERIERUNG VON BLEIBATTERIEN

PROCÉDÉ DE RÉGÉNÉRATION D'ACCUMULATEURS AU PLOMB

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.05.2011 ES 201130797 U**

(43) Date of publication of application:
**26.03.2014 Bulletin 2014/13**

(73) Proprietor: **Ulma Servicios De Manutención, S.
Coop.
20560 Oñati (ES)**

(72) Inventor: **CAUBERA ZAFRA, Francisco
E-08291 Ripollet (ES)**

(74) Representative: **Igartua, Ismael
Galbaian S.Coop.
Polo de Innovación Garaia
Goiru Kalea 1 - P.O. Box 213
20500 Arrasate-Mondragón (ES)**

(56) References cited:
**EP-A1- 1 184 928      FR-A1- 2 871 624
US-A- 5 789 903**

**Description**

TECHNICAL FIELD

This invention relates to methods for regenerating batteries, in particular methods for regenerating lead batteries.

PRIOR ART

Lead batteries are used in numerous applications. With use their capacity is reduced due to the phenomenon of deterioration until they have to be replaced. This deterioration is largely due to a phenomenon known as sulphation, in which a film of lead sulphate crystals (PbSO4) is formed on the electrodes of the battery.

The prior art contains known patent documents that face this phenomenon with a desulphation method or even propose methods for regenerating these batteries, increasing their capacity. One of the latter documents is the European application EP 1184928 A1. In the method disclosed in this document a pulsating direct current is applied between the electrodes of the battery to reduce or eliminate the lead sulphate crystals deposited on said electrodes, and after that an electrochemical doping is applied on the positive electrode, which involves applying a voltage with a carbon suspension obtained by the electrolytic oxidation of the positive electrode in a water system.

BRIEF DISCLOSURE OF THE INVENTION

It is an object of the invention to provide a method for regenerating lead batteries, as described in the claims.

In the method for regenerating lead batteries of the invention a current is applied all the time and a pulse sequenceis applied, between the electrodes of the battery for a predetermined time period, so that thanks to the pulses the lead sulphate crystals deposited on said electrodes are broken, their quantity being eliminated ot at least reduced to a large extent.

The method also comprises a charge phase in which the battery is charged, a discharge phase, following the charge phase, in which said battery is discharged with a constant direct current, an analysis phase, simultaneous to the discharge phase, in which the state of some cells comprised in said battery is analysed and it is determined if a cell is damaged or not, a replacement phase in which the cells deemed as damaged in the analysis phase are replaced, if any cell is detected as damaged, and a final charge phase in which the battery is charged again.

As a result, the useful life and the capacity of a used battery is increased without having to use additional chemical compounds, which makes the regenerating of a battery easier and cheaper.

These and other advantages and characteristics of the invention will be made evident in the light of the drawings and the detailed description thereof.

DESCRIPTION OF THE DRAWINGS

Figure 1 shows a perspective view of a 24-volt lead battery, which comprises 12 cells.

Figure 2 is a ground view without the top cover of the battery of Figure 1, where the cells of said battery are shown.

Figure 3 shows, in the form of block diagrams, a first embodiment of the method for regenerating lead batteries.

Figure 4 shows, in the form of block diagrams, a second embodiment of the method for regenerating lead batteries.

Figure 5 shows, in the form of block diagrams, a third embodiment of the method for regenerating lead batteries.

DETAILED DISCLOSURE OF THE INVENTION

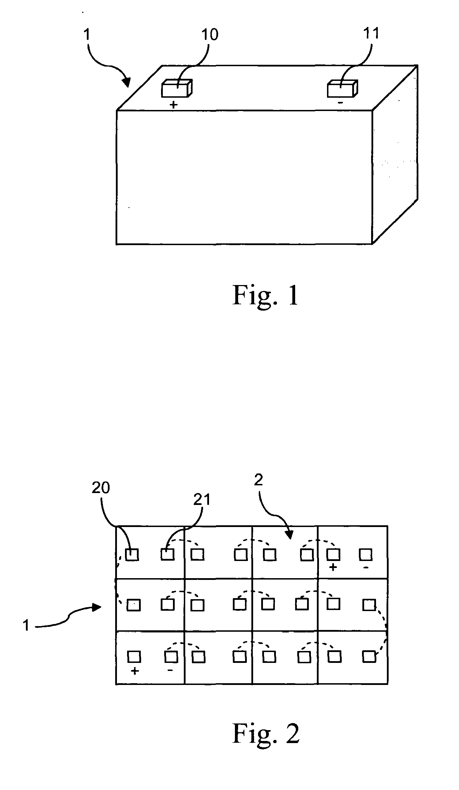

Figures 1 and 2 show a lead (or lead-acid) battery 1. Said batteries 1 comprise a plurality of cells 2 connected in series. When the battery 1 is charged each cell 2 generally comprises a voltage between electrodes 20 and 21 of approximately two volts, and its connection in series provides the total nominal voltage of the battery 1. As a result, in designing a battery 1 as many cells 2 as are required to make a battery 1 of a certain voltage are used, six cells 2 being used to obtain a 12-volt battery, twelve cells 2 for a 24-volt battery, and so on.

Each cell 2 comprises a positive electrode 20 and a negative electrode 21. When the battery 1 is charged, each cell 2 is filled with an electrolyte composed at least by sulphuric acid and distilled water, and the electrodes 20 and 21 are immersed, at least partially, in said electrolyte. The electrodes 20 and 21 comprise a plate with lead, the negative electrode 20 is preferably associated to a lead plate and the positive electrode to a lead-dioxide (PbO2) plate. During the discharging of the battery 1 the electrolyte and the lead of the negative electrode 21 and the lead dioxide of the positive electrolyte 20 interact, lead sulphate (PbSO4) being generated. This interaction, as is the case with the one that occurs in the charge process, is known in the prior art and is described, for example, in the document EP 1184928 A1.

During the life of the battery 1 the lead sulphate is accumulated in the form of crystals on the electrodes 10 and 11 of the battery 1 as the battery 1 is successively charged and discharged, or simply due to the age of the battery 1, due to chemical reactions. As a result, a layer is formed on said electrodes 10 and 11 with little or no electric or ionic conductivity, which reduces the free surface of the electrodes 10 and 11, resulting in a reduction of the capacity of the battery 1. This phenomenon is known as "sulphation", and may easily be discerned as the layer is white in colour and therefore gives a white tone to the electrodes 10 and 11.

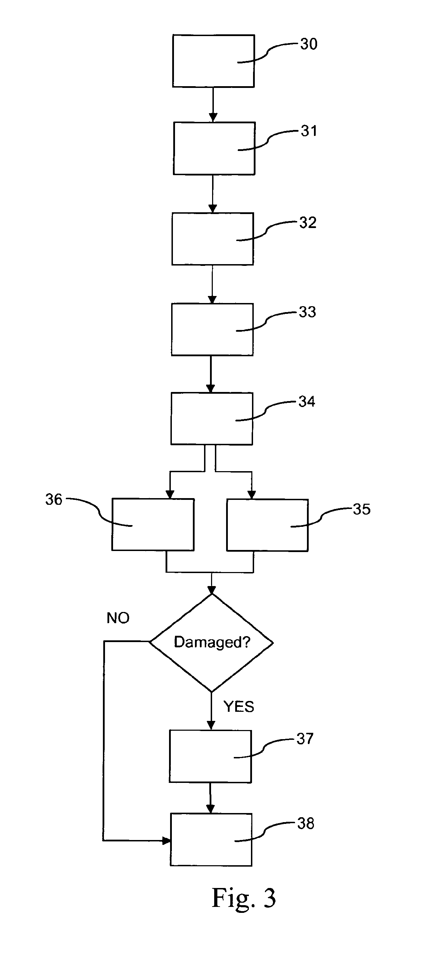

Figure 3 shows, by way of blocks, a method for regenerating used lead batteries to increase the life of used batteries 1 and increase their capacity. The method begins with a collection phase 30 in which used batteries 1 are collected for their subsequent regeneration. The method then comprises a cleaning phase 31 in which the collected batteries 1 are cleaned, possible leaks are detected, for example, and the residues stuck to the battery 1 are removed. Following cleaning, in a checking phase 32 the state of the cleaned batteries 1 is assessed to determine if it is worth regenerating them or not, the dielectric strength of said batteries 1 being measured and the batteries 1 suitable for being regenerated selected. These three phases 30, 31 and 32 precede the method 100 of regeneration of the invention, and are common to the other known methods in the prior art. The method 100 of the invention relates to the phases that occur subsequently.

The method of the invention comprises a desulphation phase 33 in which, apart of a current being supplied without being interrupted, a pulsating current at a predetermined frequency is applied between the electrodes 10 and 11 of the battery 1 for a predetermined period of time, for the purpose of dissociating the lead sulphate crystals deposited on said electrodes 10 and 11 during the use of the battery 1, at least to a large extent, from said electrodes 10 and 11. Said pulses are applied with a pulse-generating device.

It has been seen that dividing the desulphation phase 33 into three phases results in the more efficient elimination of the lead sulphate, as a result of which, in a first embodiment of the method of the invention, said desulphation phase 33 comprises the following three phases:

- First phase: a main charge in which a pulsating direct current is applied between the electrodes 10 and 11 of the battery 1 with a frequency of approximately 25 kHz.
- Second phase: an absorption charge in which a pulsating direct current is applied between the electrodes 10 and 11 of the battery 1 with a frequency of approximately 15 kHz.
- Third phase: a charge in which a direct current is applied between the electrodes 10 and 11 of the battery 1, which depends on a voltage in said battery 1 in order to provide a substantially homogeneous electrolyte charge.

The first phase has a duration of between approximately 12 hours and approximately 24 hours, said first phase and the second phase amounting to a total of approximately 36 hours. As a result, the duration of the second phase depends on the duration of the first phase, which in turn depends on the state of the battery 1 (mainly on the amount of lead sulphate it has stuck on its electrodes 10 and 11). In the first embodiment, in the desulphation phase 33 the pulses comprise a value equal or lower than 30 times the nominal value of the corresponding battery 1. For example, if the battery 1 is a 480-Ah battery the maximum current (maximum amplitude of the pulse) is 16 amps.

Following the desulphation phase 33 the method 100 comprises a charge phase 34 in which the battery 1 is charged by means of a conventional battery charger. Said charge phase 34 may occur at the same time as the desulphation phase 33, but preferably takes place after said desulphation phase 33.

Following the charge phase 34 the method 100 of the invention comprises a discharge phase 35 in which the battery 1 is discharged with a constant direct current with a conventional device adapted for that purpose, a current that is defined by the following equation:

$$I = Cn / 5$$

Where:

I: Constant direct discharge current; and
Cn: Nominal capacity of the battery (for example 480 Ah).

The method 100 of the invention also comprises an analysis phase 36 in which the state of the cells 2 of said battery 1 is analysed, which occurs at the same time as the discharge phase 35. To carry put the analysis phase 36, each cell 2 is joined to the control means by means of both electrodes 20 and 21. The state of each cell 2 is analysed measuringthe voltage between the electrodes 20 and 21 of each cell 2 . In the first embodiment an analysis phase 36 is carried out approximately every 30 minutes during the discharge phase 35, so that a visual reference of the behaviour under stress of each cell 2 is provided, it thus being determined if a cell 2 is damaged or not. When an analysis phase 36 is carried out the total voltage of the battery 1 is also measured, and control means (not shown in the figures), which may be a microprocessor, a microcontroller or an FPGA for example, calculate the voltage that ought to correspond to each cell 2 proportionally. For example, if a 24-volt battery (twelve cells 2) comprises 21.96 volts at the point at which an analysis phase 36 is carried out, 1.83 volts would correspond to each cell 2 (21.96 volts / 12). If a cell 2 comprises a lower voltage, said cell 2 would comprise a voltage lower to the one corresponding to it. Preferably a margin of tolerance M is fixed and it is used to determine a threshold voltage V lower than the voltage that would correspond to it to assess if a cell 2 is damaged or not, so that even if a cell 2 has a voltage lower than the voltage that would correspond to it, it is not determined that it is damaged unless said voltage is below the margin of tolerance M, in other words, unless the voltage of said cell 2 is below the predetermined threshold voltage V. Preferably the threshold voltage V corresponds to the following equation:

$$V = (Vt \div N) - M;$$

where:

    V: Threshold voltage;
    Vt: Total voltage of the battery 1 at that time;
    N: Number of cells 2 of said battery 1; and
    M: Margin of tolerance applied.

The margin of tolerance M is applied on the total voltage Vt of the battery 1 at that time divided by the number of cells 2 of said battery 1, and in the first embodiment it is approximately 3%, although this percentage may vary depending on the user or company responsible for the regeneration. As a result, in line with the preceding example, it is considered that a cell 2 is damaged if it has a voltage lower than 1.647 volts at that time:

$$M = 10\% * (21.64 / 12);$$

$$V = (21.64 / 12) - 3\% * (21.64 / 12) = 1.749 \text{ volts}$$

The discharge phase 35 is completed when the voltage of the battery 1 reaches a value at which each cell 2 corresponds to a voltage approximately equal to a predetermined cut-off voltage, which in the first embodiment is 1.7 volts but which may be of another value, such as 1.8 volts depending on the type of the battery. As a result, in line with the preceding example, when the voltage of the battery 1 falls to 20.4 volts the discharge is completed, which is when each of the twelve cells would correspond to 1.7 volts, which is the predetermined cut-off voltage:

$$Vv = (20.4 / 12) = 1.7 \text{ volts,}$$

where Vv: The voltage corresponding to each cell 2.

When the discharge phase 35 has ended, if it is determined that no cell 2 is damaged, the battery 1 is charged again in a final charge phase 38, as carried out in the charge phase 34, and the battery 1 is deemed to have been regenerated. If, however, it is determined that any of the cells 2 is damaged, the method 100 of the invention comprises a replacement phase 37 in which said cell 2 is replaced by a replacement cell 2 that is not damaged, and following the replacement the battery 1 is charged again in a final charge phase 38, as carried out in the charge phase 34, with a WA type curve, and the battery 1 is deemed to have been regenerated. The replacement cell 2 has passed through at least one desulphation phase 33, at least one charge phase 34, at least one discharge phase 35 and at least one analysis phase 36, as a result of which, as well as ensuring that its state is correct, its capacity has been improved, so that the resulting battery 1 comprises the requisite advantages of a longer useful life and a greater capacity.

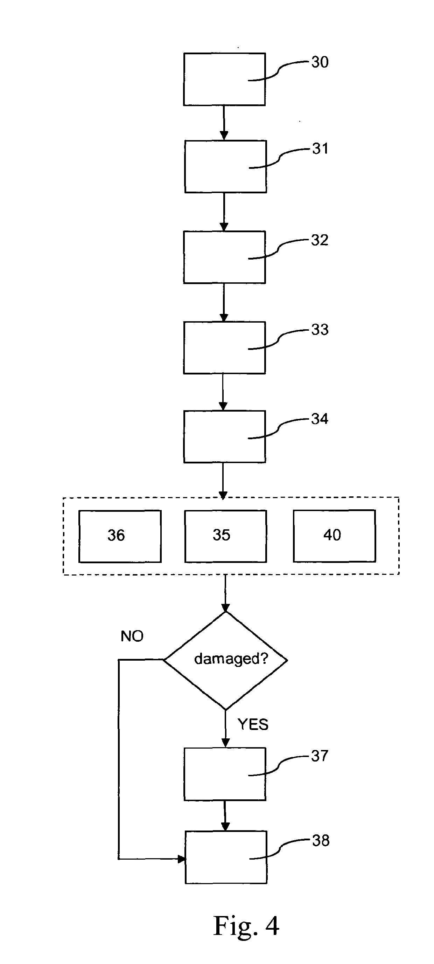

In a second embodiment of the method shown by way of example in Figure 4, in addition to that commented for the first embodiment of the method, the method also comprises a thermographic analysis phase 40 in which the temperature of at least some elements of the battery 1 is determined, elements such as the cells 2, the electrodes 20 and 21 of the cells 2, and screws or equivalent elements that may comprise the battery, for example. As a result it may be detected that a screw is not properly tightened, for example, or that the connection between cells 2 is not correct. In the thermographic analysis phase 40 thermal images of the elements of the battery 1 are obtained, and, according to said images, the control means determine the state of said elements. The control means compare the temperature of each element obtained through the images with a value preset temperature threshold, and determine the state of each element according to their corresponding comparison. The control means determine that the state of an element is correct if after the corresponding comparison they determine that the temperature obtained through the images is equal to or smaller than the corresponding temperature threshold value.

In order to carry out this analysis a thermographic camera, not shown in the Figures, is preferably used, which obtains thermal images of the battery 1 and which is communicated with the control means, the control means being capable of determining the temperature of each element according to the images received from the camera. Thanks to prior studies for example, temperature threshold values may be determined for each of the elements whose state is to be checked, from which it is known that the corresponding element is in a poor state (damaged). The threshold values may be stored in the control means or in a memory communicated with the control means, so that the control means compare the information received from the camera with these values and determine if the temperature is correct or not.

The thermographic analysis phase 40 is simultaneous to the discharge phase 35, which is when the intensity of the current through the battery is at its greatest and, therefore, when the highest temperatures are to be obtained in the elements of the battery 1.

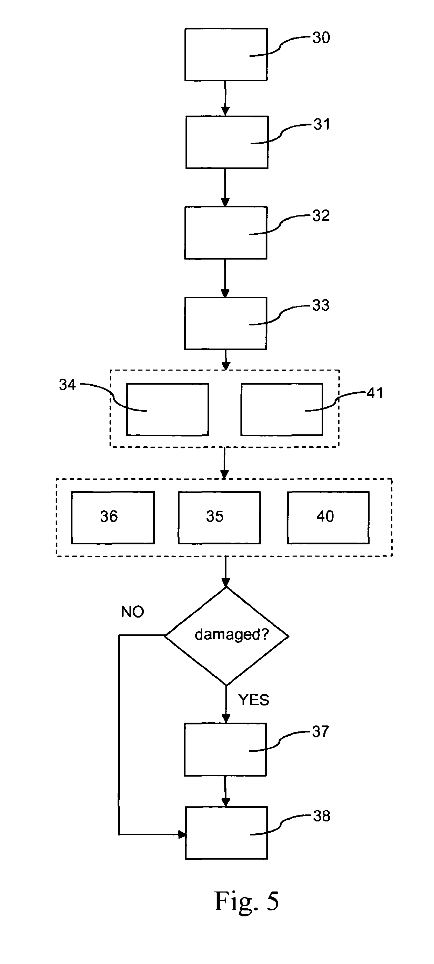

In a third embodiment of the method shown by way of example in Figure 5, in addition to the description of the second embodiment the method comprises a second thermographic analysis phase 41, analog to the thermographic analysis phase 40 commented in the second embodiment, simultaneous to the charge phase 34 due to the fact that during said charge phase 34 the current of the battery 1 also comprises a high intensity.

**Claims**

1.  Method for regenerating lead batteries, comprising a desulphation phase (33) in which a pulsating direct current is applied between the electrodes (10, 11) of the battery (1) for a predetermined period of time, to reduce or eliminate the lead sulphate crystals deposited on said electrodes (10, 11), **characterised in that**, following the desulphation phase (33), it comprises a charge phase (34) in which the battery (1) is charged, a discharge phase (35), subsequent to the charge phase (34), in which said battery (1) is discharged with a constant current, at least one analysis phase (36), simultaneous to the discharge phase (35), in which the state of some of the cells (2) of said battery (1) is analysed and the state of said cells (2) is determined, a replacement phase (37) in which, if during the analysis phase (36) it is determined that if a cell (2) is damaged, said cell (2) is replaced by another replacement cell (2), and a final charge phase (38) in which the battery (1) is charged again, said final charge phase (38) taking place after the replacement phase (37) if in the analysis phase (36) it is determined that a cell (2) is damaged, or after the discharge (35) and analysis (36) phases if in said analysis phase (36) it is determined that no cell (2) is damaged.

2.  Method according to claim 1, wherein the sulphation phase (33) comprises a main charge in which a pulsating direct current is applied between the electrodes (10, 11) of the battery (1) with a frequency of approximately 25 kHz, an absorption charge in which a pulsating direct current is applied between the electrodes (10, 11) of the battery (1) with a frequency of approximately 15 kHz, and a maintenance charge in which a direct current is applied between the electrodes (10, 11) of the battery (1), which depends on the voltage in said battery (1) at each point in order to provide a substantially homogeneous electrolyte charge.

3.  Method according to claim 2, wherein the main charge has a duration of between approximately 12 hours and approximately 24 hours, said main charge and the absorption charge comprising a combined duration of approximately 36 hours.

4.  Method according to any of the preceding claims, wherein during the discharge phase (35), the analysis phase (36) in which the state of the cells (2) of the battery is analysed (1) is repeated every 30 minutes approximately.

**5.** Method according to any of the preceding claims, wherein in the analysis phase (36) the state of the cells (2) is analysed by measuring the voltage between its electrodes (20, 21), it being determined that a cell (2) is damaged if said measured voltage is lower than a certain threshold voltage (V).

**6.** Method according to claim 5, wherein the threshold voltage (V) corresponds to the equation

$$V = (Vt / N) - M,$$

where:

V: Threshold voltage;
Vt: Total voltage of the battery (1) at that time;
N: Number of cells (2) of said battery (1); and
M: Margin of tolerance applied.

**7.** Method according to claim 6, wherein the margin of tolerance (M) is approximately 3% of the total voltage of the battery (1) at that time divided by the number of cells (2) of said battery (1).

**8.** Method according to any of the preceding claims, wherein the cells (2) that are used in the replacement phase (37) to replace the damaged cells (2) have previously passed through at least one desulphation phase (33), at least one charge phase (34), at least one discharge phase (35), and at least one analysis phase (36), it having been determined in said analysis phase (36) that said cells (2) are not damaged.

**9.** Method according to any of the preceding claims, wherein the direct discharge current corresponds to the equation

$$I = Cn / 5,$$

where:

I: Constant discharge current; and
Cn: Nominal capacity of the battery.

**10.** Method according to any of the preceding claims, comprising a thermographic analysis phase (40) simultaneous to the discharge phase (35), in which thermal images of a plurality of elements of the battery (1) are obtained, and in which, according to said images, the control means determine the state of said elements.

**11.** Method according to claim 10, wherein the control means compare the temperature of each element obtained through the images with a preset threshold value and determine the state of each element according to their corresponding comparison.

**12.** Method according to claim 11, wherein the control means determine that the state of an element is correct if after the corresponding comparison they determine that the temperature obtained through the images is equal to or smaller than the corresponding threshold value.

**13.** Method according to any of claims 10 to 12, comprising a second thermographic analysis phase (41) analog to the thermographic analysis phase (40), simultaneous to the charge phase (34).


**Patentansprüche**

**1.** Verfahren zur Regenerierung von Bleibatterien, umfassend eine Ensulfatierungsphase (33), in der ein pulsierender Gleichstrom zwischen den Elektroden (10, 11) der Batterie (1) während eines vorbestimmten Zeitraums angelegt wird, um die Sulfatkristalle, die auf den Elektroden (10, 11) abgelegt sind, zu reduzieren oder zu eliminieren, **dadurch gekennzeichnet, dass** es, nach der Ensulfatierungsphase (33), eine Ladephase (34) umfasst, in der die Batterie (1) geladen wird, eine Entladungsphase (35), die auf die Ladephase (34) folgt, in der die Batterie (1) mit einem konstanten Strom entladen wird, mindestens eine Analysephase (36) gleichzeitig mit der Entladungsphase (35), in der der Zustand von einigen der Zellen (2) der Batterie (1) analysiert und der Zustand der Zellen (2) bestimmt wird, eine Austauschphase (37), in der, wenn während der Analysephase (36) bestimmt wird, dass eine Zelle (2) beschädigt ist, die Zelle (2) durch eine andere Austauschzelle (2) ausgetauscht wird, und eine endgültige Ladephase (38), in der die Batterie (1) erneut geladen wird, wobei die endgültige Ladephase (38) nach der Austauschphase (37) stattfindet, wenn in der Analysephase (36) bestimmt wird, dass eine Zelle (2) beschädigt ist, oder nach der Entladungs- (35) und Analyse- (36) Phase, wenn in der Analysephase (36) bestimmt wird, dass keine Zelle (2) beschädigt ist.

2. Verfahren nach Anspruch 1, wobei die Sulfatierungsphase (33) eine Hauptladung umfasst, in der ein pulsierender Gleichstrom zwischen den Elektroden (10, 11) der Batterie (1) mit einer Frequenz von ungefähr 25 kHz angelegt wird, eine Absorptionsladung, in der ein pulsierender Gleichstrom zwischen den Elektroden (10, 11) der Batterie (1) mit einer Frequenz von ungefähr 15 kHz angelegt wird, und eine Erhaltungsladung, in der ein pulsierender Gleichstrom zwischen den Elektroden (10, 11) der Batterie (1) in Abhängigkeit von der Spannung in der Batterie (1) an jedem Punkt angelegt wird, um eine im Wesentlichen homogene Elektrolytladung bereitzustellen.

3. Verfahren nach Anspruch 2, wobei die Hauptladung eine Dauer zwischen ungefähr 12 Stunden und ungefähr 24 Stunden aufweist, wobei die Hauptladung und die Absorptionsladung eine kombinierte Dauer von ungefähr 36 Stunden aufweisen.

4. Verfahren nach einem der vorhergehenden Ansprüche, wobei während der Entladungsphase (35) die Analysephase (36), in der der Zustand der Zellen (2) der Batterie analysiert (1) wird, ungefähr alle 30 Minuten wiederholt wird.

5. Verfahren nach einem der vorhergehenden Ansprüche, wobei in der Analysephase (36) der Zustand der Zellen (2) durch die Messung der Spannung zwischen ihren Elektroden (20, 21) analysiert wird, wobei bestimmt wird, dass eine Zelle (2) beschädigt ist, wenn die gemessene Spannung niedriger als eine bestimmte Schwellenspannung (V) ist.

6. Verfahren nach Anspruch 5, wobei die Schwellenspannung (V) der folgenden Gleichung entspricht:

$$V = (Vt / N) - M,$$

wobei:

V: Schwellenspannung;
Vt: Gesamtspannung der Batterie (1) zu dieser Zeit;
N: Anzahl der Zellen (2) der Batterie (1);
und M: Angewendete Fehlermarge.

7. Verfahren nach Anspruch 6, wobei die Fehlermarge (M) ungefähr 3 % der Gesamtspannung der Batterie (1) zu dieser Zeit, geteilt durch die Anzahl der Zellen (2) der Batterie (1), beträgt.

8. Verfahren nach einem der vorhergehenden Ansprüche, wobei die Zellen (2), die in der Austauschphase (37) verwendet werden, um die beschädigten Zellen (2) auszutauschen, zuvor mindestens eine Ensulfatierungsphase (33), mindestens eine Ladephase (34), mindestens eine Entladephase (35) und mindestens eine Analysephase (36) durchlaufen haben, wobei in der Analysephase (36) bestimmt wurde, dass die Zellen (2) nicht beschädigt sind.

9. Verfahren nach einem der vorhergehenden Ansprüche, wobei der Entladungs-Gleichstrom der folgenden Gleichung entspricht:

$$I = Cn / 5,$$

wobei:

I: Konstanter Entladungsstrom; und

Cn: Nominale Kapazität der Batterie.

10. Verfahren nach einem der vorhergehenden Ansprüche, umfassend eine thermographische Analysephase (40), gleichzeitig mit der Entladungsphase (35), in der Wärmebilder einer Vielzahl von Elementen der Batterie (1) erhalten werden, und in der, gemäß den Bildern, die Steuermittel den Zustand der Elemente bestimmen.

11. Verfahren nach Anspruch 10, wobei die Steuermittel die Temperatur jedes Elements, erhalten durch die Bilder, mit einem vorbestimmten Schwellenwert vergleichen und den Zustand jedes Elements gemäß ihrem entsprechenden Vergleich bestimmen.

12. Verfahren nach Anspruch 11, wobei die Steuermittel bestimmen, dass der Zustand eines Elements korrekt ist, wenn sie nach dem entsprechenden Vergleich bestimmen, dass die Temperatur, die durch die Bilder erhalten wurde, gleich wie oder niedriger als der entsprechende Schwellenwert ist.

13. Verfahren nach einem der Ansprüche 10 bis 12, umfassend eine zweite thermographische Analysephase (41), analog zur thermographischen Analysephase (40), gleichzeitig mit der Entladungsphase (34).

**Revendications**

1. Procédé pour régénérer des batteries au plomb, comprenant une phase de désulfatation (33) au cours de laquelle un courant continu pulsé est appliqué entre les électrodes (10, 11) de la batterie (1) pendant une période de temps prédéterminée, pour réduire ou éliminer les cristaux de sulfate de plomb déposés sur lesdites électrodes (10, 11), **caractérisé en ce que**, à la suite de la phase de désulfatation (33), il comprend une phase de charge (34) au cours de laquelle la batterie (1) est chargée, une phase de décharge (35), à la suite de la phase de charge (34), au cours de laquelle ladite batterie (1) est déchargée avec un courant constant, au moins une phase d'analyse (36), simultanée à la phase de décharge (35), au cours de laquelle l'état de certaines des cellules (2) de ladite batterie (1) est analysé et l'état desdites cellules (2) est déterminé, une phase de remplacement (37) au cours de laquelle, si pendant la phase d'analyse (36) il est déterminé qu'une cellule (2) est endommagée, ladite cellule (2) est remplacée par une autre cellule de remplacement (2), et une phase de charge finale (38) au cours de laquelle la batterie (1) est de nouveau chargée, ladite phase de charge finale (38) ayant lieu après la phase de remplacement (37) s'il est déterminé au cours de la phase d'analyse (36) qu'une cellule (2) est endommagée, ou après les phases de décharge (35) et d'analyse (36) s'il est déterminé au cours de ladite phase d'analyse (36) qu'aucune cellule (2) n'est endommagée.

2. Procédé selon la revendication 1, dans lequel la phase de sulfatation (33) comprend une charge principale au cours de laquelle un courant continu pulsé est appliqué entre les électrodes (10, 11) de la batterie (1) avec une fréquence d'environ 25 kHz, une charge d'absorption au cours de laquelle un courant continu pulsé est appliqué entre les électrodes (10, 11) de la batterie (1) avec une fréquence d'environ 15 kHz, et une charge de maintenance au cours de laquelle un courant continu est appliqué entre les électrodes (10, 11) de la batterie (1), lequel dépend de la tension dans ladite batterie (1) en chaque point afin d'obtenir une charge d'électrolyte sensiblement homogène.

3. Procédé selon la revendication 2, dans lequel la charge principale a une durée entre environ 12 heures et environ 24 heures, ladite charge principale et la charge d'absorption ayant une durée combinée d'environ 36 heures.

4. Procédé selon l'une quelconque des revendications précédentes, dans lequel, pendant la phase de décharge (35), la phase d'analyse (36) au cours de laquelle l'état des cellules (2) de la batterie (1) est analysé est répétée à peu près toutes les 30 minutes.

5. Procédé selon l'une quelconque des revendications précédentes, dans lequel, au cours de la phase d'analyse (36), l'état des cellules (2) est analysé en mesurant la tension entre ses électrodes (20, 21), résultant en la détermination qu'une cellule (2) est endommagée si ladite tension mesurée est inférieure à une certaine tension de seuil (V).

6. Procédé selon la revendication 5, dans lequel la tension de seuil (V) correspond à l'équation

$$V = (Vt/N) - M,$$

où :

V: tension de seuil ;
Vt: tension totale de la batterie (1) à cet instant ;
N: nombre de cellules (2) de ladite batterie (1) ; et
M: marge de tolérance appliquée.

**7.** Procédé selon la revendication 6, dans lequel la marge de tolérance (M) est égale à environ 3 % de la tension totale de la batterie (1) à cet instant divisée par le nombre de cellules (2) de ladite batterie (1).

**8.** Procédé selon l'une quelconque des revendications précédentes, dans lequel les cellules (2) qui sont utilisées au cours de la phase de remplacement (37) pour remplacer les cellules (2) endommagées sont précédemment passées par au moins une phase de désulfatation (33), au moins une phase de charge (34), au moins une phase de décharge (35), et au moins une phase d'analyse (36), au cours de laquelle phase d'analyse (36) il a été déterminé que lesdites cellules (2) ne sont pas endommagées.

**9.** Procédé selon l'une quelconque des revendications précédentes, dans lequel le courant de décharge continu correspond à l'équation

$$I = Cn/5,$$

où :

I : courant de décharge constant ; et
Cn : capacité nominale de la batterie.

**10.** Procédé selon l'une quelconque des revendications précédentes, comprenant une phase d'analyse thermographique (40) simultanée à la phase de décharge (35), au cours de laquelle des images thermiques d'une pluralité d'éléments de la batterie (1) sont obtenues, et au cours de laquelle, conformément aux dites images, les moyens de commande déterminent l'état desdits éléments.

**11.** Procédé selon la revendication 10, dans lequel les moyens de commande comparent la température de chaque élément obtenue par l'intermédiaire des images avec une valeur de seuil prédéterminée et déterminent l'état de chaque élément conformément à leur comparaison correspondante.

**12.** Procédé selon la revendication 11, dans lequel les moyens de commande déterminent que l'état d'un élément est correct s'ils déterminent, après la comparaison correspondante, que la température obtenue par l'intermédiaire des images est égale ou inférieure à la valeur de seuil correspondante.

**13.** Procédé selon l'une quelconque des revendications 10 à 12, comprenant une deuxième phase d'analyse thermographique (41) analogue à la phase d'analyse thermographique (40), simultanée à la phase de charge (34).

Fig. 1

Fig. 2

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1184928 A1